# EUROPÄISCHE PATENTSCHRIFT

(11) **EP 4 200 245 B1**
(45) Veröffentlichungstag und Bekanntmachung des Hinweises auf die Patenterteilung: **27.11.2024**
(21) Anmeldenummer: 21801520.4
(22) Anmeldetag: 27.10.2021
(51) Int. Cl.: B66D 1/48

(54) **SEILWINDE**
CABLE WINCH
TREUIL À CÂBLE

(30) Priorität: 30.10.2020 DE 102020128577; 11.12.2020 DE 102020133217
(43) Veröffentlichungstag der Anmeldung: 28.06.2023
(73) Patentinhaber: Liebherr-Components Biberach GmbH, 88400 Biberach an der Riß (DE)
(72) Erfinder: HAUSLADEN, Norbert, 88400 Biberach (DE); SCHMID, Thomas, 88499 Daugendorf (DE)
(74) Vertreter: Thoma, Michael
(86) Internationale Anmeldenummer: PCT/EP2021/079858
(87) Internationale Veröffentlichungsnummer: WO 2022/090329

(56) Entgegenhaltungen:
- WO-A2-2010/101832
- DE-A1- 102017 223 552
- JP-A- 2003 226 487
- US-A1- 2008 156 928

## Beschreibung

Die vorliegende Erfindung betrifft eine Seilwinde mit einer Seiltrommel, auf der ein Seil aufwickelbar ist, sowie ein Hebezeug wie beispielsweise einen Kran, mit einer solchen Seilwinde. Insbesondere betrifft die Erfindung eine Seiltrommel für hochfeste Faserseile.

Seilwinden unterliegen aufgrund ihrer hohen Leistungsdichten bisweilen hohen Temperaturbelastungen, die sich einerseits im Antrieb der Seilwinde, beispielsweise einem Hydraulikmotor oder einem Elektromotor, und einem üblicherweise zwischengeschalteten Getriebe niederschlagen. Andererseits spielt aber auch die Temperaturbelastung des aufzuwickelnden Seils eine Rolle, insbesondere wenn ein hochfestes Faserseil oder Kunststoffseil verwendet wird, da dessen Grenztemperatur im Vergleich zu Stahlseilen deutlich niedriger ist und der Einfluss von Temperaturbelastungen auf die Lebensdauer des Seils zu berücksichtigen ist. Grundsätzlich ist es aber auch bei Stahlseilen von Interesse, überhöhte Temperaturbelastungen zu vermeiden oder zumindest zu kennen, da hierdurch ein Schmierstoffverlust des Seils und ein zu starker Fettaustritt befördert wird und ggf. erhöhter Verschleiß eintritt.

Die Schrift WO 2010/101832 A2 offenbart eine Seiltrommel mit einem Motor für verschiedene Anwendungen wie auch einen Kran. Es wird ein in die Anordnung integriertes Sensorsystem beschrieben, welches verschiedene Parameter wie auch die Temperatur überwachen kann. Die Steuereinheit soll anhand der sensorisch ermittelten Temperatur allerdings lediglich ein Kühlsystem zum Kühlen des Windengetriebes in Gang setzen bzw. bestimmen, wann die Kühlung nötig wird.

Aus der Schrift US 2008/156928 A1 ist eine Seiltrommel mit Sensoren bekannt, welche zur Überwachung verschiedener physikalischer Eigenschaften der Trommel dienen. Hierbei wird neben Parametern wie Spannung, Dehnung und Deformation auch eine Messung der Temperatur der Trommel beschrieben. Die Ermittlung dieser Daten dient der Ermittlung der Lebensdauer bzw. der Wartungsintervalle der Trommel.

Die Schrift DE 10 2017 223552 A1 beschreibt eine Kabeltrommel, welche mit Sensoren ausgestattet ist mit dem Ziel die Kabellänge des auf der Kabeltrommel vorhandenen Kabels zu bestimmen. Des Weiteren werden Sensoren zur Überwachung der Umgebung der Kabeltrommel während des Transports oder der Lagerung beschrieben.

Die Schrift JP 2003 226487 beschreibt eine Windentrommel, welche mit einem Bremssystem ausgestattet ist, welches bei einem Freidrehen der Winde eingreift. Die in diesem Fall eintretende Erwärmung der Bremse wird überwacht und über den Zustrom eines Mediums des Kühlsystems kontrolliert und geregelt.

Aus der Schrift AU 2015/101415 A4 ist eine Seilwinde bekannt, deren Seiltrommel von einem Elektromotor angetrieben wird, wobei der Motor in Abhängigkeit von Lastgrenzen angesteuert wird, die für verschiedene Betriebsmodi verschieden versetzt werden. Zusätzlich wird dabei auch die Motortemperatur überwacht, um bei einer zu stark ansteigenden Motortemperatur die Leistung herabzusetzen bzw. stärker zu begrenzen.

Die EP 32 99 331 A1 beschreibt eine Seilwinde mit einem Faserseil, wobei vorgeschlagen wird, die Temperatur des Faserseils mithilfe eingebetteter Magnete und deren Magnetfeld zu bestimmen, das sich temperaturabhängig verändert und von Magnetfeldsensoren gemessen wird. Aus Magnetfeldänderungen kann daher auf Temperaturänderungen geschlossen werden. Dabei wird zusätzlich mittels einem kontaktlosen Temperatursensor die Oberflächentemperatur des Faserseils gemessen, um einen Temperatur-Gradienten zwischen der über das Magnetfeld gemessenen Kerntemperatur und der Oberflächentemperatur bestimmen zu können. Die Schrift geht davon aus, dass die Lebensdauer des Faserseils unter zu hohen Temperaturen leidet, da sich bei Temperaturen über 60° C irreversible Rekristallisationsprozesse ergeben, und sich das Seil durch interne Reibung der Seilfasern, externe Reibung an Umlenkrollen und durch die Umgebungstemperatur aufheizt. Die Winde wird ggf. gekühlt.

Diese Art der vorgeschlagenen Temperaturmessung ist in der Praxis jedoch problematisch. Zum einen sind Änderungen des Magnetfelds der in das Faserseil eingebetteten Magnetelemente nicht nur temperaturbedingt, sondern auch von anderen externen Einflüssen getrieben, beispielsweise durch induktive Vorgänge im Bereich der Seilwinde und dessen Antrieb. Zum anderen können am Seil partiell sehr unterschiedliche Temperaturbelastungen bzw. Aufheizvorgänge stattfinden. So werden beispielsweise die unteren Wickellagen von der Seiltrommel her erwärmt, wenn sich die Seiltrommel stärker erwärmt, sei es durch die Wärmebelastung des üblicherweise verwendeten Getriebes im Trommelinneren oder durch im Betrieb auftretende Fehler wie beispielsweise einen beginnenden Lagerschaden oder ein fressen-bewegter Teil im Getriebe, was in sehr kurzer Zeit zu einer erheblichen Temperaturerhöhung der Seiltrommel beitragen kann. Die oberen Lagen oder gar der abgewickelte Teil des Seils erfährt diese Temperaturbelastung nicht, sodass sich sehr unterschiedliche Seiltemperaturen ergeben können, die kaum gemessen werden können, da die unteren Wickellagen für Temperatursensoren schwer zugänglich sind bzw. die genannten Magnete aufgrund der übereinanderliegenden Wickellagen nur ungenaue Messungen zulassen.

Der vorliegenden Erfindung liegt die Aufgabe zugrunde, eine verbesserte Seilwinde sowie ein verbessertes Hebezeug mit einer solchen Seilwinde der eingangs genannten Art zu schaffen, die Nachteile des Standes der Technik vermeiden und letzteren in vorteilhafter Weise weiterbilden. Insbesondere soll eine verlässliche Temperaturüberwachung geschaffen werden, die auch die besonders aufheizungsgefährdeten Seilabschnitte berücksichtigt.

Erfindungsgemäß wird die genannte Aufgabe durch eine Seilwinde gemäß Anspruch 1 gelöst. Bevorzugte Ausgestaltungen der Erfindung sind Gegenstand der abhängigen Ansprüche.

Es wird also vorgeschlagen, die Seiltrommeltemperatur zu bestimmen und damit eine Überwachung des Wärmeeintrags in das Seil von der Seiltrommel her zu ermöglichen. Erfindungsgemäß besitzt die Seilwinde eine Temperaturbestimmungsvorrichtung zum Bestimmen der Temperatur der Seiltrommel. Heizt sich die Seiltrommel auf, kommt es durch den direkten Kontakt zu den auf dem Trommelmantel aufgewickelten Seilwindungen zu einer entsprechenden Temperaturbelastung des Seils, sodass aus der gemessenen bzw. bestimmten Seiltrommeltemperatur eine Aussage zur Temperaturbelastung des Seils gemacht werden kann.

Diesem Ansatz liegt die Überlegung zugrunde, dass die Seiltemperatur weniger durch innere Reibung der Seilfasern bzw. -drähte oder die Reibung an den Umlenkrollen ansteigt, sondern der wesentliche Teil der Temperaturbelastung und der damit einhergehende Temperaturanstieg von der Wärmeübertragung von der Seiltrommel her stammt. Insofern kann - im Vergleich zu einer direkten Messung der Seiltemperatur an sich überraschend - eine präzisere Aussage über die Temperatur- und Wärmebelastung des Seils getroffen werden, wenn die Seiltrommeltemperatur exakt bestimmt wird und bekannt ist.

Die Seiltrommel ist nämlich üblicherweise im Betrieb eine permanente Wärmequelle, die das darauf aufgewickelte Seil aufheizt. Üblicherweise wird mit Hilfe von einem elektrischen oder hydraulischen Antrieb und einem Getriebe ein Drehmoment an der Seiltrommel erzeugt, welches in Abhängigkeit vom Hebelarm des auf- bzw. ablaufenden Seils die entsprechende Seilzugkraft erzeugt.

Aufgrund der hohen Leistungsdichte und der sich ergebenden kompakten Einbauabmessungen haben sich in vielen Anwendungen Seilwinden mit eingeschobenem Planetengetriebe etabliert. Durch die Reibung an den Zahnflanken und Lagern, die Schmiermittelumwälzung und andere dissipative Effekte entsteht in jedem Getriebe eine Verlustleistung, die den Wärmehaushalt des Getriebes maßgeblich beeinflusst. Bei normaler Anwendung lässt sich dieser Wärmehaushalt an sich grob vorausberechnen, ist aber dennoch von verschiedenen Parametern wie dem jeweiligen Lastkollektiv, den Drehzahlen, der Umgebungstemperatur und anderen Einflussgrößen abhängig und daher im Detail nicht bekannt. Zudem können in jedem Getriebe unerwartete und nicht kalkulierbare Fehler auftreten, wie z. B. ein Ölverlust und damit einhergehende Lagererwärmung, oder ein Fressen an den Zahnflanken, was in sehr kurzer Zeit zu einer erheblichen Temperaturerhöhung führen und im Extremfall ein auf der Seiltrommel aufgewickeltes Faserseil in den unteren Lagen sogar zerstören kann, sodass beim Abwickeln des Seils an dieser Stelle mit einem Lastabriss gerechnet werden müsste. Wird die Temperatur der Seiltrommel exakt bestimmt, sodass die Temperatur an der Kontaktstelle zum Seil bekannt ist, können solche gravierenden Gefahren vermieden werden.

Bedingt durch die Wärmeleitfähigkeit der verschiedenen Bauteile führt aber auch eine normale Getriebeerwärmung zu einer signifikanten Erwärmung der angrenzenden Seiltrommel und letztendlich auch zu einer Erwärmung des darauf gespeicherten Seils.

Insbesondere bei hochfesten Faserseilen, die aus Kunstfasern wie beispielsweise Aramidfasern (HMPA), Aramid-/Kohlefasergemischen, hochmodularen Polyethylenfasern (HMPE) oder PBO-Fasern gefertigt werden können, und auch anderen Kunststoffseilen ist die Seillebensdauer stark temperaturabhängig. Mit zunehmender Seiltemperatur sinkt generell die Seillebensdauer, während innerhalb eines bestimmten Temperaturbereichs die Lebensdauer nahezu konstant bleibt. Des Weiteren besitzen Faserseile wesentlich geringere Grenztemperaturen wie Stahlseile, bis zu welcher seitens der Seilhersteller der bestimmungsgemäße Gebrauch des Faserseils definiert ist.

Die Temperaturüberwachung der Seiltrommel kann aber grundsätzlich auch bei Stahlseilen sinnvoll sein, um beispielsweise Seiltemperaturen zu erfassen, die zu einer verstärkten Entschmierung bzw. zu starkem Fettaustritt führen, was dann wiederum vorzeitigen Verschleiß zur Folge hat.

In vorteilhafter Weiterbildung der Erfindung erfolgt die Temperaturbestimmung direkt an der Seiltrommel, um die Trommeltemperatur möglichst exakt zu bestimmen. Im Vergleich dazu sind Messungen der Motortemperatur oder der Getriebeöltemperatur weniger aussagekräftig, da solche Messungen der Motortemperatur oder der Getriebeöltemperatur keinen ausreichend genauen Rückschluss auf die aktuelle Temperatur der Seiltrommel an der Berührstelle des Seils ermöglichen, da hier weitere relevante Faktoren wie beispielsweise der aktuelle Ölstand nicht berücksichtigt wären.

Vorzugsweise kann die Temperaturbestimmung auf der Getriebeseite der Seiltrommel erfolgen. Auf der genannten Getriebeseite erfolgt üblicherweise der größte Energieeintrag in die Seiltrommel, sodass dort die höchste Erwärmung zu erwarten ist. Wird die Temperaturbestimmung auf der genannten Getriebeseite der Seiltrommel, insbesondere einem das Getriebe umgebenden Trommelabschnitt oder einem an das Getriebe angrenzenden Trommelabschnitt, der ggf. auch die auf der Getriebeseite liegende, seitliche Bordscheibe umfassen kann, vorgenommen, können die höchsten Temperaturbelastungen des aufgewickelten Seils verlässlich erfasst werden.

Die Temperaturbestimmungsvorrichtung kann verschiedene Temperatursensoren umfassen.

In vorteilhafter Weiterbildung der Erfindung kann zumindest ein stationärer Temperatursensor vorgesehen sein, gegenüber dem die Seiltrommel rotieren kann. Ein solcher stationärer Sensor kann sein Sensorsignal in einfacher Weise bereitstellen bzw. in einfacher Weise angeschlossen werden, beispielsweise über eine Signalleitung, wobei grundsätzlich aber auch eine verdrahtungslose Signalübertragung möglich wäre.

Vorteilhafterweise kann der Temperatursensor berührungslos arbeiten. Dies ist insbesondere bei stationärer Anordnung des Temperatursensors vorteilhaft, da dann kein Verschleiß durch Reibung gegenüber der Seiltrommel auftritt.

Ein solcher stationärer Temperatursensor kann insbesondere außerhalb der Seiltrommel angeordnet sein und stirnseitig auf den Seiltrommelkorpus blicken bzw. ausgerichtet sein, wobei der Temperatursensor insbesondere im Bereich eines Bordscheibenfußes, der mit dem Trommelmantel verbunden ist bzw. daran anschließt, angeordnet sein kann.

Um mit einem stationären, außerhalb der Seiltrommel angeordneten Temperatursensor trotzdem die Temperatur in einem tieferliegenden Seilwinden- bzw. Seiltrommelabschnitt erfassen zu können, kann in vorteilhafter Weiterbildung der Erfindung ein Temperatur- und/oder Wärme-Leitelement vorgesehen sein, das zumindest teilweise in eine Ausnehmung hineinragt, die in der Seilwinde, insbesondere in der Seiltrommel ausgebildet sein kann. Das genannte Temperatur- und/oder Wärme-Leitelement kann die Temperatur bzw. Wärme aus dem Inneren der Seilwinde nach außen herausleiten, sodass ein außerhalb der Seilwinde liegender Abschnitt des Leitelements hinsichtlich seiner Temperatur erfasst werden kann.

Insbesondere kann eine Aufnahmebohrung oder eine bohrungsähnliche Aufnahmeausnehmung vorgesehen sein, die sich von einer Stirnseite der Seiltrommel her in den Trommelmantel hineinerstrecken kann. Ein beispielsweise stiftförmiges Temperatur- und/oder Wärme-Leitelement kann zumindest teilweise in der genannten Aufnahmebohrung sitzen und sich vorteilhafterweise aus dieser heraus erstrecken, beispielsweise mit einem Kopf auf die Stirnseite der Seiltrommel herausragen.

Ein beispielsweise berührungslos arbeitender Temperatursensor kann die Temperatur eines solchen Temperatur- und/oder Wärme-Leitelements erfassen, wobei hierzu beispielsweise die Trommel in eine Drehstellung verbracht werden kann, in der das Leitelement passend zum stationären Temperatursensor positioniert wird.

Gegebenenfalls kann an dem Leitelement auch ein ringförmiger Erfassungskragen angebracht sein, sodass ein stationärer Temperatursensor die Temperatur des Leitelements auch ohne bestimmte Rotationsstellung der Seilwinde und/oder ggf. auch bei rotierender Seilwinde erfassen kann. Ein solcher ringförmiger Erfassungskragen kann insbesondere auch dann vorteilhaft sein, wenn mehrere Temperatur- und/oder Wärme-Leitelemente vorgesehen sind, beispielsweise in Aufnahmebohrungen sitzen, die über den Umfang verteilt angeordnet sind.

Um tatsächlich die Temperatur in der Tiefe der Ausnehmung zu erfassen, kann die Ausnehmung im äußeren Abschnitt mit Übermaß ausgebildet sein, so dass ein Spalt bzw. Ringspalt zwischen Leitelement und Ausnehmung verbleibt und keine Temperaturbeeinflussung durch Kontakt zu dem vielleicht kühleren Aussenabschnitt erfolgt.

Zusätzlich kann ein stationärer Temperatursensor auch in einem Getriebegehäuse angeordnet und/oder am Getriebegehäuse montiert sein, wobei ein solches Getriebegehäuse sich zumindest teilweise im Inneren des Trommelkorpus erstrecken kann und/oder sich zumindest teilweise außerhalb des Trommelkor-

pus erstrecken kann. Der Temperatursensor kann dabei außerhalb des Trommelkorpus oder innerhalb des Trommelkorpus an dem Getriebegehäuse vorgesehen sein. Insbesondere kann der Temperatursensor an einem Getriebegehäuseabschnitt angebracht sein, der direkt am Trommelkorpus sitzt bzw. auf dem der Trommelkorpus flächig sitzend abgestützt ist.

Der Temperatursensor kann aber auch unabhängig von der Montage am Getriebegehäuse innerhalb oder außerhalb des Trommelkorpus angeordnet sein.

In Weiterbildung der Erfindung kann die Temperaturbestimmungsvorrichtung auch einen mit der Seiltrommel mitrotierenden Temperatursensor aufweisen. Ein solcher mitrotierender Temperatursensor kann insbesondere in den Innenraum der Seiltrommel integriert sein bzw. im Innenraum der Seiltrommel untergebracht sein.

Vorteilhafterweise kann ein solcher mitrotierender Temperatursensor ein Signalübertragungsmodul aufweisen, das drahtlos arbeitend ausgebildet ist, um die Sensorsignale drahtlos an eine Speicher- und/oder Auswerteeinrichtung übertragen zu können. Vorteilhafterweise kann ein solches Signalübertragungsmodul einen Energiespeicher aufweisen, der ebenso wie das Signalübertragungsmodul in die Seiltrommel integriert bzw. im Inneren der Seiltrommel aufgenommen sein kann.

Vorteilhafterweise kann die Seiltrommel eine Inspektions- und/oder Wartungsöffnung besitzen, durch die hindurch der Temperatursensor und/oder das Signalübertragungsmodul und/oder dessen Energiespeicher zugänglich und ggf. auch entnehmbar bzw. austauschbar ist. Eine solche Inspektions- und/oder Wartungsöffnung kann beispielsweise stirnseitig im Trommelkorpus vorgesehen sein.

Der genannte Energiespeicher kann beispielsweise eine Batterie oder ein Akku sein.

Alternativ oder zusätzlich kann der Temperatursensor und/oder dessen Signalübertragungsmodul aber auch von einem Energieversorgungsmodul mit Energie gespeist werden, das mithilfe der Drehbewegung der Seiltrommel Energie erzeugt. Ein solches Energieerzeugungsmodul kann beispielsweise induktiv ausgebildet sein, wobei beispielsweise aber auch ein Dynamo die Rotationsbewegung der Seiltrommel und/oder einer damit verbundenen Komponente wie beispielsweise einer Getriebewelle in Energie zur Versorgung des Signalübertragungsmoduls umsetzen kann.

Ein solcher mitrotierender Temperatursensor kann insbesondere an einer Innenmantelfläche der Seiltrommel angebracht sein, wobei die Position des Temperatursensors vorteilhafterweise im Bereich des Getriebes liegt, über das die Seiltrommel angetrieben wird. Beispielsweise kann der Temperatursensor an einer Trommelmantelinnenfläche angebracht sein, die zwischen zwei Planetengetriebestufen und/oder benachbart zu einer Getriebestufe liegt.

Zusätzlich kann aber auch ein Temperatursensor an der Seiltrommel-Bordscheibe mitrotierend angebracht sein, beispielsweise auf einer dem Seilwickelbereich abgewandten Bordscheibenaußenseite. Ein solcher Temperatursensor kann vorteilhafterweise im Bereich des Fußes der Bordscheibe und/oder des Übergangs der Bordscheibe zum Trommelmantel vorgesehen sein.

Unabhängig von der Anordnung des Temperatursensors ist zumindest ein Temperatursensor als Temperaturschalter ausgebildet, der bei Erreichen einer vorbestimmten Temperatur ein Signal abgibt. Dies ist eine für das aufzuwickelnde Seil relevante Grenztemperatur und kann ggf. eine Vorwarn-Temperatur umfassen, um das Erreichen der Grenztemperatur oder einer Vorwarngrenze anzuzeigen.

Ein solcher Temperaturschalter kann beispielsweise als Bimetallschalter ausgebildet sein, der ein sich unter Temperatur verformendes Schaltelement besitzt, das bei Erreichen der vorbestimmten Temperatur einen Kontaktzustand des Schalters verändert. Der Temperaturschalter kann vorteilhafterweise einen integrierten Energiespeicher umfassen und eine Signalvorrichtung besitzen, die bei Erreichen der vorbestimmten Temperatur ein Signal abgibt.

Zusätzlich zu einem solchen Temperaturschalter kann die Temperatur-Bestimmungsvorrichtung auch zumindest ein Temperatur-Indikatorelement umfassen, das das Erreichen oder Überschreiten einer vorbestimmten Temperatur optisch anzeigt. Insbesondere kann das Temperatur-Indikatorelement einen Farbumschlag zeigen, wenn die vorbestimmte Temperatur erreicht oder überschritten wird, sodass der Temperaturanstieg durch eine geänderte Farbe des Indikatorelements angezeigt wird. Ein solches Temperatur-Indikatorelement kann beispielsweise thermochrome Pigmente umfassen, deren Farbe sich in Abhängigkeit der Temperatur ändert.

Vorteilhafterweise kann ein solches Temperatur-Indikatorelement irreversibel farbumschlagend ausgebildet sein, um das Erreichen oder Überschreiten einer kritischen Temperatur dauerhaft anzuzeigen.

Eine solche Anzeigevorrichtung zum Anzeigen des Erreichens und/oder Überschreitens einer vorbestimmten Temperatur und/oder von im Seilwindenbetrieb erfassten Seiltrommeltemperaturen kann aber auch bei Verwendung der zuvor beschriebenen, anders ausgebildeten Temperatursensoren vorgesehen sein und in Abhängigkeit der von dem zumindest einen Temperatursensor bereitgestellten Sensorsignal arbeiten. Insbesondere kann eine solche Anzeigevorrichtung am Steuerstand oder allgemein einer Steuervorrichtung des Hebezeugs, die beispielsweise auch eine Fernsteuerung umfassen kann, vorgesehen sein, um dem Maschinenführer die Seiltrommeltemperatur und/oder das Erreichen einer Grenztemperatur bzw. vorbestimmten Temperatur anzuzeigen.

Vorteilhafterweise ist eine solche Anzeigevorrichtung dazu ausgebildet, zumindest ein Warnsignal abzugeben, wenn eine für das aufzuwickelnde Seil kritische Seiltrommeltemperatur erreicht wird oder gar überschritten wurde.

Die Anzeigevorrichtung kann grundsätzlich verschieden ausgebildet sein, beispielsweise ein optisches Display oder eine andere optische Anzeige beispielsweise in Form eines Blinklichts umfassen. Zusätzlich kann auch eine akustische Anzeigevorrichtung zur Ausgabe eines akustischen Warnsignals vorgesehen sein.

In Weiterbildung der Erfindung kann die erfasste Seiltrommeltemperatur auch von einer Auswerteeinrichtung weiterverarbeitet werden, um Einflüsse der Seiltrommeltemperatur auf die Restlebensdauer des Seils zu bestimmen bzw. zu verarbeiten. Insbesondere kann eine Bestimmungsvorrichtung die Restlebensdauer und/oder Ablegereife des Seils unter Berücksichtigung der ermittelten Seiltrommeltemperaturen bestimmen und ein Ablegesignal und/oder Restlebensdauersignal in Abhängigkeit der Seiltrommeltemperatur bereitstellen.

Eine solche Bestimmungsvorrichtung kann beispielsweise eine einen Mikroprozessor aufweisende elektronische Steuervorrichtung umfassen, die als Auswerteeinrichtung zum Auswerten des Temperatursignals oder der Temperatursignale einen Software-Baustein mit einem Auswertealgorithmus aufweist, der das oder die bereitgestellten Temperatursignale auswertet.

Die Bestimmung der Ablegereife und/oder der Restlebensdauer kann dabei natürlich auch noch weitere Betriebskenngrößen berücksichtigen, beispielsweise das auf das Seil wirkende Lastkollektiv oder Umgebungseinflüsse wie UV-Lichtdosis, Umgebungstemperatur, Staub- und/oder Chemikalienbelastung oder auch andere gemessene Seilkenngrößen wie Durchmesser-Verjüngungen, Seillängung oder Seilsteifigkeitsveränderungen.

Wird von der genannten Bestimmungsvorrichtung die Ablegereife bestimmt, kann auf der Anzeigevorrichtung der Seilwinde oder des Hebezeugs ein entsprechendes Ablegereifesignal angezeigt werden. Alternativ oder zusätzlich kann das Ablegereifesignal auch ein Abschalten oder Beschränken des Seilwindenbetriebs auslösen, beispielsweise dergestalt, dass nur noch Hublast senkende Bewegungen möglich sind.

Alternativ oder zusätzlich zur Bestimmung der Restlebensdauer und/oder der Ablegereife kann das zumindest eine Temperatursignal aber auch dazu verwendet werden, in die Steuerung des Betriebs der Seilwinde und/oder des Hebezeugs einzugreifen.

In Weiterbildung der Erfindung kann in Abhängigkeit der erfassten Seiltrommeltemperatur der Betrieb der Seilwinde zur Abkühlung vorübergehend gestoppt und/oder das Lastkollektiv reduziert werden. Insbesondere kann die Steuervorrichtung dazu ausgebildet sein, eine Überschreitung der zulässigen Grenztemperatur des Seils aufgrund einer unzulässigen Erwärmung der Seiltrommel, das heißt in Abhängigkeit der Seiltrommeltemperatur zu verhindern, indem beispielsweise vor Erreichen der Grenztemperatur des Seils der Betrieb der Seilwinde zur Abkühlung gestoppt oder das Lastkollektiv reduziert wird.

Alternativ oder zusätzlich kann die Steuervorrichtung der Seilwinde oder des Hebezeugs dazu ausgebildet sein, in Abhängigkeit der erfassten Seiltrommeltemperatur Kühlmaßnahmen einzuleiten, beispielsweise eine Umwälzung des Getriebe- und/oder Antriebsschmiermittels der Seilwinde zu veranlassen und/oder zu verstärken und/oder eine außenliegende Kühlung der Seiltrommel durch Luft oder andere Medien zu veranlassen und/oder zu verstärken, beispielsweise ein Lüfterrad einzuschalten und/oder auf eine höhere Geschwindigkeit zu stellen.

Die genannte Steuervorrichtung ist generell vorteilhafterweise dazu ausgebildet, in Abhängigkeit der erfassten Seiltrommeltemperatur eine Steuerung und/oder Regelung des Temperaturhaushalts der Seiltrommel einzustellen und/oder zu verändern, insbesondere derart, dass bei einer zu hohen Seiltrommeltemperatur und/oder einem zu starken Anstieg der Seiltrommeltemperatur eine kühlende Maßnahme zum Kühlen der Seiltrommel eingeleitet oder verstärkt wird.

Die Erfindung wird nachfolgend anhand bevorzugter Ausführungsbeispiele und zugehörigen Zeichnungen näher erläutert. In den Zeichnungen zeigen:
- Fig. 1:: eine Schnittansicht einer Seilwinde nach einer vorteilhaften Ausführung der Erfindung, bei der die Temperaturbestimmungsvorrichtung einen stationären Temperatursensor aufweist, der die Temperatur der Seiltrommel an einem Bordscheibenfuß berührungslos erfasst,
- Fig. 2:: eine Schnittansicht einer Seilwinde ähnlich Fig. 1, wobei die Temperaturbestimmungsvorrichtung einen stationären Temperatursensor in einem Getriebegehäuse des die Seiltrommel antreibenden Getriebes aufweist,
- Fig. 3:: eine Schnittansicht einer Seilwinde ähnlich den vorhergehenden Figuren, wobei die Temperaturbestimmungsvorrichtung einen mit der Seiltrommel mitrotierenden Temperatursensor aufweist, der im Bereich des Getriebes an einer Trommelmantelinnenseite angeordnet ist und über eine drahtlose Signalübertragungseinrichtung im Inneren der Seiltrommel sein Temperatursignal bereitstellt,
- Fig. 4:: eine Schnittansicht einer Seilwinde ähnlich Fig. 3, wobei der mitrotierende Temperatursensor und dessen Signalübertragungsvorrichtung von einer Energieversorgungseinrichtung mit Energie gespeist werden, die Drehbewegungen der Seiltrommel in elektrische Energie umwandelt,
- Fig. 5:: eine Schnittansicht einer Seilwinde ähnlich den vorhergehenden Figuren, wobei die Temperaturbestimmungsvorrichtung einen Temperaturschalter aufweist, der an einer Außenseite einer Bordscheibe der Seiltrommel angeordnet ist,
- Fig. 6:: Schnitt- und Stirnansichten einer Seilwinde ähnlich den vorhergehenden Figuren, wobei die Temperaturbestimmungsvorrichtung ein Temperatur-Indikatorelement mit einer optischen Anzeige der Seiltrommeltemperatur durch Farbumschlag aufweist, das an einer Stirnseite der Seiltrommel sichtbar angeordnet ist, und
- Fig. 7:: eine Schnittansicht einer Seilwinde ähnlich den vorhergehenden Figuren, wobei die Temperaturbestimmungsvorrichtung einen Temperaturleitstift umfasst, der von einer Stirnseite her in eine Aufnahmebohrung in den Trommelmantel hineinragt, wobei ein stationärer, berührungslos arbeitender Temperatursensor zum Erfassen der Temperatur des genannten Temperaturleitstifts vorgesehen ist.

Wie die Figuren zeigen, umfasst die Seilwinde 1 eine Seiltrommel 2 mit einem im Wesentlichen zylindrischen Trommelmantel 3, der seitlich rechts und links von Bordscheiben 4 eingefasst ist. Der Trommelmantel 3 kann mit einer Rillung versehen, aber auch glatt ausgebildet sein.

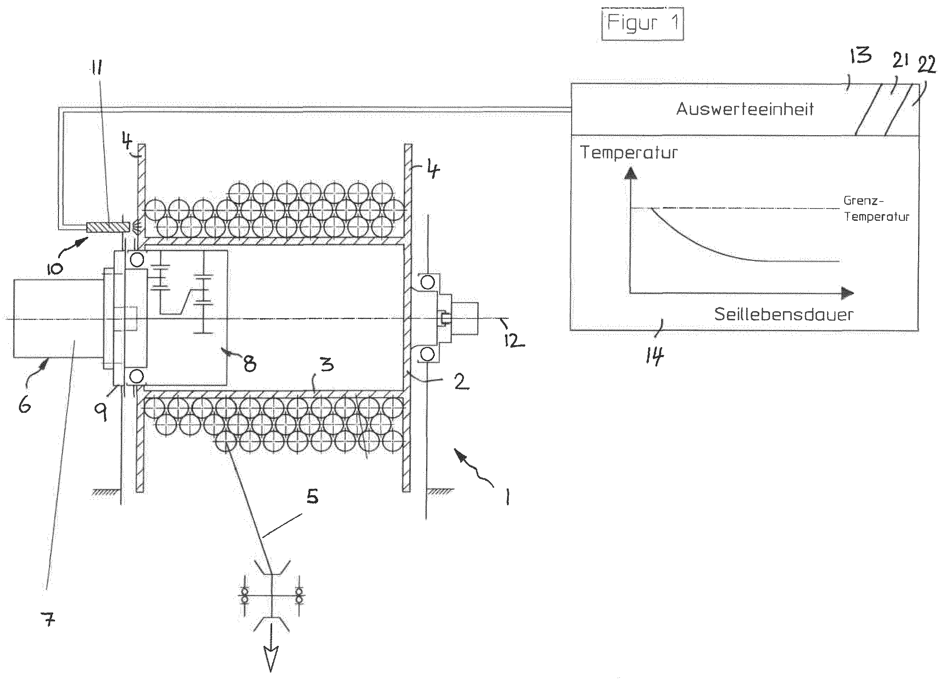

Auf dem Trommelmantel 3 der Seiltrommel 2 wird zwischen den Bordscheiben 4 ein Seil 5 aufgewickelt, wobei das Seil 5 einlagig oder mehrlagig aufgewickelt werden kann, vgl. Figur 1.

Die Seiltrommel 2 kann von einem Seilwindenantrieb 6 angetrieben werden, der einen Windenmotor bzw. -antrieb 7 beispielsweise in Form eines Elektromotors oder eines Hydraulikmotors aufweisen kann.

Der Seilwindenantrieb 6 kann ferner ein Getriebe 8 umfassen, das zumindest teilweise im Inneren der Seiltrommel 2 angeordnet sein kann. Insbesondere kann sich das Getriebe 8 von einer Trommelseite her in das Innere des Trommelmantels 3 hineinerstrecken, wobei die Seiltrommel 2 auf einem Getriebegehäuse 9 abgestützt sein kann. Insbesondere kann die Seiltrommel 2 auf einem drehbar gelagerten Gehäuseteil abgestützt und damit drehbar gelagert sein. Grundsätzlich wäre es aber auch möglich, die Seiltrommel 2 auf einem stehenden Getriebegehäuseteil drehbar abzustützen.

Wie die Figuren zeigen, kann der Windenantrieb 7 seitlich an der Seiltrommel 2 angeordnet, beispielsweise an das Getriebe 8 angeflanscht sein, das sich in den Trommelmantel 3 hineinerstreckt.

Das genannte Getriebe 8 kann beispielsweise als Planetengetriebe ausgebildet sein und beispielsweise zwei oder mehr Planetenstufen aufweisen. Grundsätzlich sind aber auch andere Getriebeausbildungen und -anordnungen möglich.

Die Seilwinde 1 besitzt eine Temperaturbestimmungseinrichtung 10 zum Bestimmen der Temperatur der Seiltrommel 2.

Da üblicherweise die Seiltrommel 2 auf der Antriebsseite vom Getriebe 8 her oder, je nach Ausbildung des Seilwindenantriebs 6, auch vom Windenantrieb 7 her am stärksten wärmebeaufschlagt ist und dort die höchsten Seiltrommeltemperaturen auftreten, ist die Temperaturbestimmungseinrichtung 10 vorteilhafterweise der Getriebe- und/oder Antriebsseite der Seiltrommel 2 zugeordnet bzw. dazu ausgebildet, die Seiltrommeltemperatur auf der Getriebe- bzw. Antriebsseite zu messen. Insbesondere kann die Temperaturbestimmungseinrichtung 10 zumindest einen Temperatursensor 11 aufweisen, der die Temperatur eines Trommelabschnitts misst, der am Getriebe 8 und/oder am Windenantrieb 7 angeordnet oder unmittelbar dazu benachbart ist. Insbesondere kann zumindest ein Temperatursensor 11 an der Bordscheibe 4 an der Getriebe- und/oder Antriebsseite der Seiltrommel 2 oder an einem Abschnitt des Trommelmantels 3, der am Getriebe 8 liegt bzw. das Getriebe 8 umgreift, angeordnet ist.

Dabei können verschiedene Temperatursensoren vorgesehen und/oder Temperatursensoren an verschiedenen Orten angeordnet sein.

Wie Figur 1 zeigt, kann ein vorzugsweise berührungslos arbeitender Temperatursensor 11 stationär an einer Stirnseite der Seiltrommel 2 angeordnet sein, beispielsweise stehend an einem Getriebe- und/oder Antriebsflansch montiert sein, um die Temperatur der Seiltrommel 2 an deren Stirnseite zu messen. Insbesondere kann der genannte Temperatursensor 11 mit seinem Messbereich einem Fußabschnitt der Bordscheibe 4 zugewandt sein, der an den Trommelmantel 3 angrenzt. Beispielsweise kann der Temperatursensor 11 in einem Abstand von der Trommeldrehachse 12 angeordnet sein, der im Wesentlichen dem Radius des Trommelmantels 3 entspricht. Beispielsweise kann der Temperatursensor 11 einer ersten Wickellage genüberliegend angeordnet sein, vgl. Figur 1.

Der Temperatursensor 11 kann sein Temperatursignal zyklisch oder kontinuierlich einer Auswerteeinheit 13 bereitstellen, die das Temperatursignal auswertet, um beispielsweise auf einer Anzeigevorrichtung 14, die ein Display umfassen kann, eine Warnmeldung anzuzeigen, wenn die Seiltrommeltemperatur einen Grenzwert erreicht oder überschreitet.

Alternativ oder zusätzlich kann die Auswerteeinheit 13 das Temperatursignal, ggf. zusammen mit weiteren Umgebungs- und/oder Betriebsparametern und/oder anderen Seilkenngrößen, auswerten, um die Ablegereife und/oder Restlebensdauer des Seils 5 unter Berücksichtigung der gemessenen Temperatur zu bestimmen. Ein Ablegereifesignal und/oder ein die Restlebensdauer wiedergebendes Signal kann ebenfalls auf der genannten Anzeigevorrichtung 14 ausgegeben werden.

Alternativ oder zusätzlich kann das Ablegereife- und/oder Restlebensdauersignal auch dazu verwendet werden, den Betrieb der Seilwinde 1 abzuschalten oder einzuschränken, wenn die Ablegereife erreicht wird oder sich die Seilwinde 1 der Ablegereife des Seils annähert. Alternativ oder zusätzlich kann das Ablegereife- und/oder Restlebensdauersignal auch einem Wartungs- und/oder Planungsmanagementsystem bereitgestellt werden, um einen Austausch des Seils zu veranlassen und/oder zu planen.

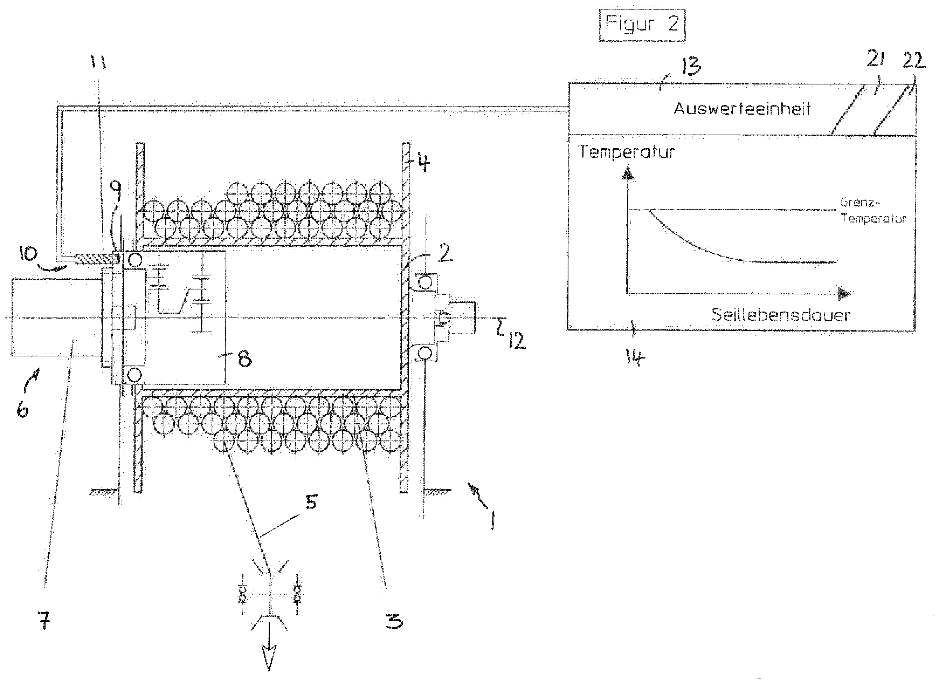

Wie Figur 2 zeigt, kann die Temperaturbestimmungseinrichtung 10 auch einen Temperatursensor 11 aufweisen, der an dem Getriebegehäuse 9 montiert ist bzw. im Getriebegehäuse 9 angeordnet ist. Insbesondere kann ein solcher Temperatursensor 11 an einem Abschnitt des Getriebegehäuses 9 vorgesehen sein, das unmittelbar angrenzend an die Seiltrommel 2 positioniert ist und/oder die Seiltrommel 2 abstützt. Beispielsweise kann der Temperatursensor 11 stirnseitig aus dem Getriebegehäuse 9 herausgeführt sein und/oder an einem stationären Abschnitt des Getriebegehäuses 9 angeordnet sein.

Die stationären Temperatursensoren 11, wie sie in den Figuren 1 und 2 gezeigt sind, können in einfacher Weise an die Auswerteeinheit 13 angeschlossen werden, beispielsweise durch ein Signalübertragungskabel, wobei grundsätzlich aber auch eine drahtlose Signalübertragung möglich wäre.

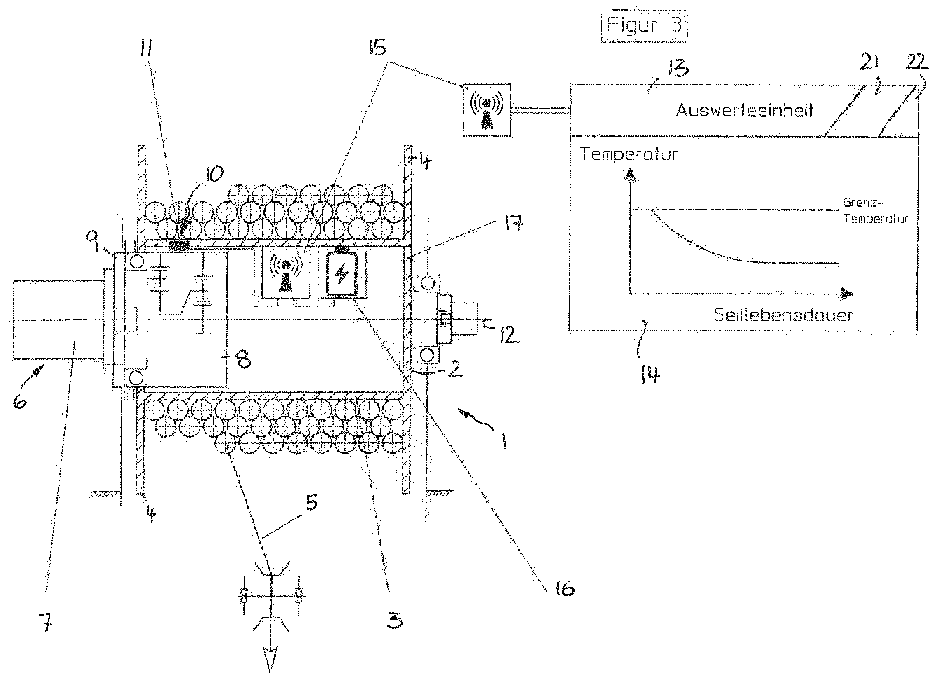

Wie Figur 3 zeigt, kann die Temperaturbestimmungseinrichtung 10 aber auch einen mit der Seiltrommel 2 mitrotierenden Temperatursensor 11 aufweisen, wobei ein solcher mitrotierender Temperatursensor 11 vorteilhafterweise in das Innere der Seiltrommel 2 integriert sein und/oder an einer Innenmantelfläche des Trommelmantels 3 angebracht sein kann. Vorteilhafterweise kann auch ein solcher mitrotierender Temperatursensor 11 auf der Getriebeseite der Seiltrommel 2 angeordnet sein, beispielsweise an einem Trommelmantelabschnitt, der das Getriebe 8 umgibt, beispielsweise in einem Bereich zwischen zwei Getriebestufen, vgl. Figur 3.

Der Temperatursensor 11 umfasst vorteilhafterweise eine drahtlos arbeitende Signalübertragungseinrichtung 15, beispielsweise in Form eines Funk- und/oder Bluetooth- und/oder WLAN-Moduls, das Sensorsignale drahtlos an die Auswerteeinrichtung 13 übertragen kann.

Eine solche Signalübertragungseinrichtung 15 kann ebenfalls im Inneren der Seiltrommel 2 angenommen sein oder mit der Seiltrommel 2 mitrotierend angebracht sein, wobei es grundsätzlich auch möglich wäre, die Signalübertragungseinrichtung 15 an einer Außenseite der Seiltrommel 2, beispielsweise einer der Bordscheiben 4 anzubringen.

Die Signalübertragungseinrichtung 15 und/oder der Temperatursensor 11 kann aus einem Energiespeicher 16 mit elektrischer Energie versorgt werden, wobei ein solcher Energiespeicher 16 ebenfalls mitrotierend an der Seiltrommel 2 montiert sein kann, beispielsweise in das Innere integriert, vgl. Figur 3.

Um den im Inneren der Seiltrommel 2 integrierten Temperatursensor 11 warten und/oder austauschen zu können, kann die Seiltrommel 2 vorteilhafterweise eine Wartungs- und/oder Montageöffnung 17 aufweisen, durch die hindurch der Temperatursensor 11 und/oder dessen akzessorischen Komponenten wie das Signalübertragungsmodul bzw. -einrichtung 15 zugänglich sind und vorteilhafterweise auch ausgetauscht werden können. Beispielsweise kann eine solche Wartungs- und/oder Montageöffnung 17 in einer Stirnseite der Seiltrommel 2 ausgebildet sein und einen Zugang in das Innere des Trommelmantels 3 von der Stirnseite gewähren. Die Wartungs- und/oder Montageöffnung 17 kann unmittelbar angrenzend an einen Lagerflansch der Seiltrommel 2 vorgesehen sein.

Vorteilhafterweise kann die Wartungs- und/oder Montageöffnung 17 durch einen Deckel verschlossen werden.

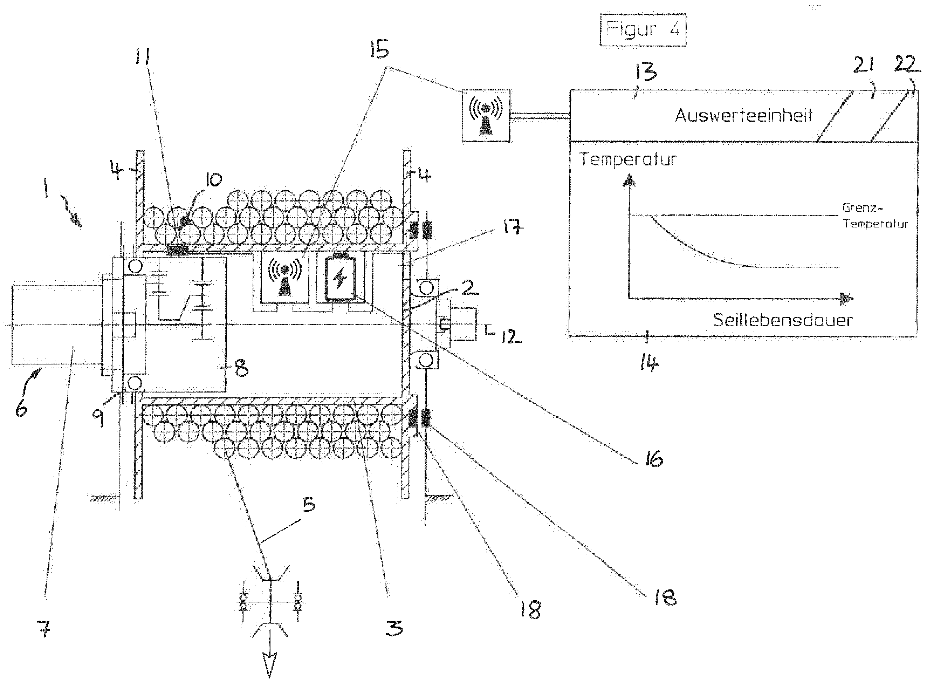

Wie Figur 4 zeigt, kann die Temperaturbestimmungseinrichtung 10 auch von einem Energieerzeuger 18 her mit elektrischer Energie versorgt werden, der aus der rotatorischen Bewegung der Seiltrommel 2 elektrische Energie gewinnt. Beispielsweise kann ein solcher Energieerzeuger 18 induktiv arbeitend ausgebildet sein und einen mit der Seiltrommel 2 mitrotierenden Teil und einen feststehenden Teil umfassen, sodass durch die Bewegung der mitrotierenden und feststehenden Teile elektrische Energie erzeugt wird. Beispielsweise kann an einer Bordscheibe 4 der mitrotierende Energieerzeugerteil montiert sein und der feststehende Energieerzeugerteil an einem Träger, der stirnseitig vor der Bordscheibe 4 sitzt, sodass sich die mitrotierenden und feststehenden Energieerzeugerteile rotatorisch aneinander vorbeibewegen, wenn sich die Seiltrommel 2 dreht.

Der Energieerzeuger 18 kann die erzeugte Energie grundsätzlich direkt in das Signalübertragungsmodul 15 oder auch den Temperatursensor 11 einspeisen bzw. diesen Komponenten bereitstellen. Vorteilhafterweise kann die erzeugte Energie aber auch in den zuvor schon erwähnten Energiespeicher 16 eingespeist werden, aus dem dann die Sensorkomponenten mit elektrischer Energie versorgt werden.

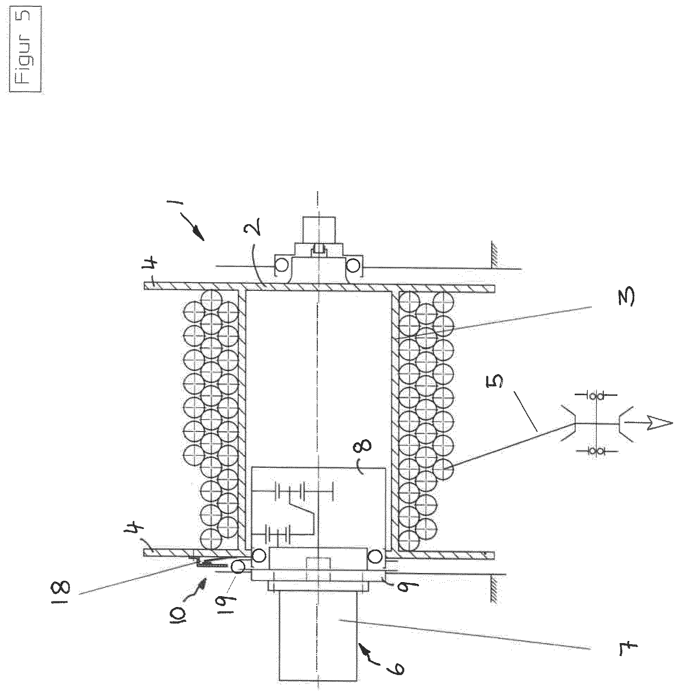

Wie Figur 5 zeigt, kann die Temperaturbestimmungseinrichtung 10 auch einen Temperaturschalter 19 aufweisen, der bei Erreichen einer vorbestimmten Seiltrommeltemperatur ein Signal abgibt oder ermöglicht. Ein solcher Temperaturschalter 19 kann beispielsweise als Bimetallschalter ausgebildet sein und einen Bimetallfühler besitzen, der sich bei Temperaturänderung verformt und eine Kontaktschaltung verändert, insbesondere einen Kontakt schließt, um ein Temperatursignal bereitzustellen oder zu ermöglichen.

Vorteilhafterweise kann der Temperaturschalter 19 einen Energiespeicher 16 beispielsweise in Form einer Batterie besitzen, um dann über ein Signalübertragungsmodul 15 das Temperatursignal bereitzustellen, das das Erreichen oder Überschreiten oder einer vorbestimmten Temperatur, beispielsweise der Grenztemperatur des Seils, oder auch eine Annäherung an diese Temperatur anzeigt.

Das vom Temperaturschalter 19 bereitgestellte Signal kann verschiedener Natur sein, beispielsweise ein Akustiksignal umfassen oder ein optisches Signal beispielsweise in Form eines Blinklichts aufweisen.

Ein solcher Temperaturschalter 19 kann ebenfalls auf der Getriebeseite der Seiltrommel 2 angeordnet sein, beispielsweise stirnseitig an der Bordscheibe 4 montiert sein, die am Windenantrieb 7 liegt.

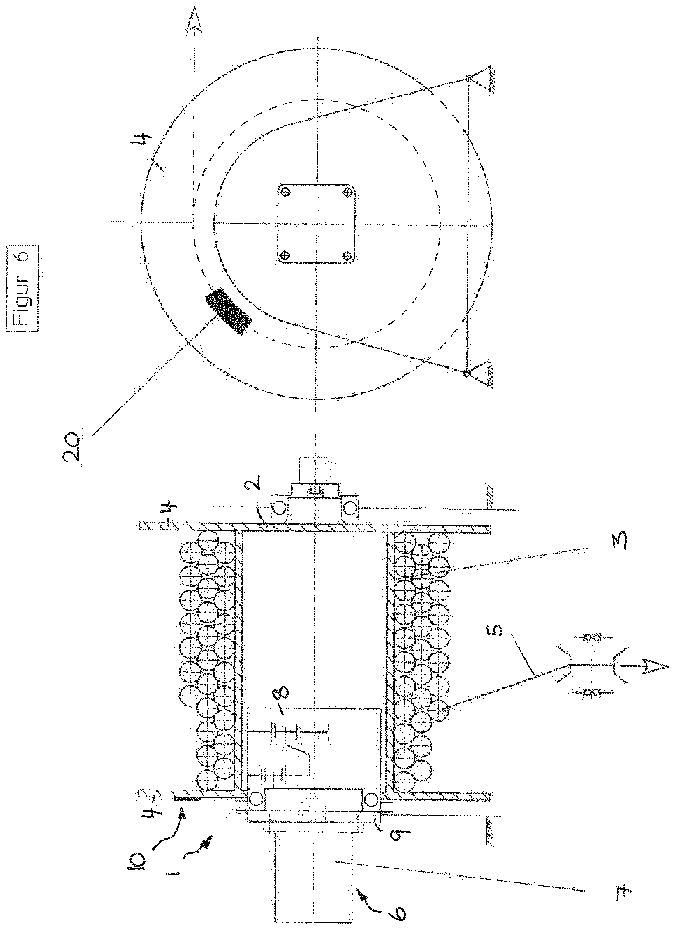

Wie Figur 6 zeigt, kann die Temperaturbestimmungseinrichtung 10 auch ein Temperatur-Indikatorelement 20 umfassen, das bei Erreichen oder Überschreiten einer vorbestimmten Temperatur, beispielsweise der Grenztemperatur des Seils, ein optisches Signal bzw. eine optische Anzeige in Form einer Farbänderung bereitstellt. Ein solches Temperatur-Indikatorelement 20 kann beispielsweise thermochrome Pigmente aufweisen, deren Farbe umschlägt, wenn die Temperatur über einen vorbestimmten Wert hinaus ansteigt.

Vorteilhafterweise kann das Temperatur-Indikatorelement 20 irreversibel farbumschlagend ausgebildet sein, das heißt seine die erhöhte Temperatur anzeigende, geänderte Farbe behalten, auch wenn die Temperatur wieder absinkt. Hierdurch kann auch nach Auftreten einer Überhitzung, beispielsweise auch im abgestellten Betrieb der Seilwinde nachträglich festgestellt werden, dass die Seiltrommel 2 eine vorbestimmte Temperaturgrenze überschritten hatte.

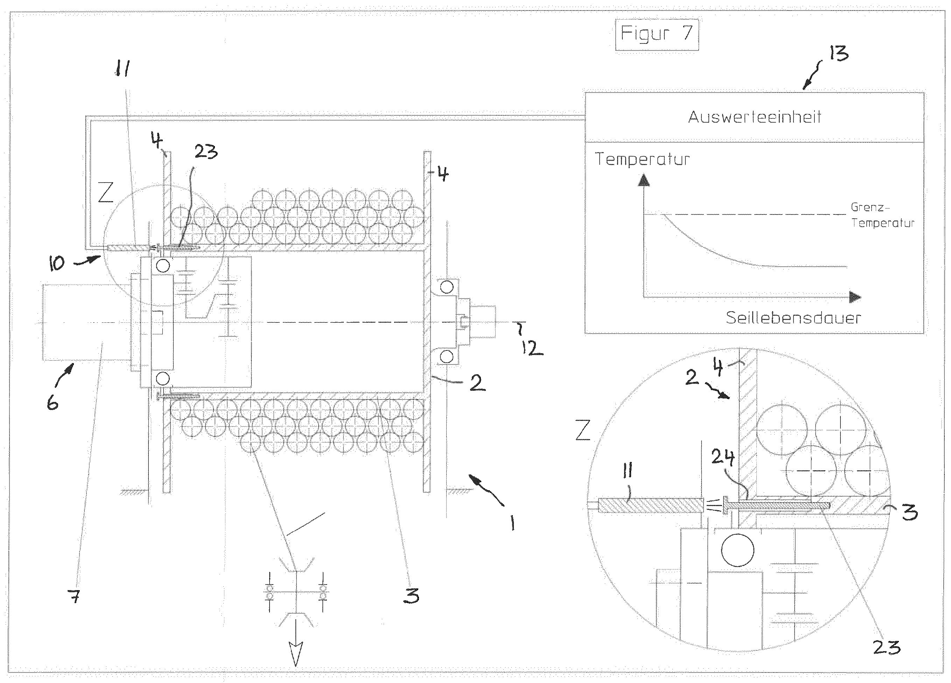

Wie Figur 7 zeigt, kann die Temperaturüberwachungseinrichtung 10 auch ein Temperatur- und/oder Wärme-Leitelement 23 umfassen, das es erlaubt, mit einem einfach zugänglich positionierten Temperatursensor 11 die Seiltrommeltemperatur an einer unzugänglichen Stelle zu erfassen. Vorteilhafterweise kann das genannte Temperatur- und/oder Wärme-Leitelement 23 sich zumindest teilweise in eine Ausnehmung 24 hineinerstrecken, die in einem innenliegenden Abschnitt der Seiltrommel ausgebildet ist bzw. sich dorthin hineinerstreckt und zu einer Außenseite der Seilwinde 1 hin offen sein kann.

Beispielsweise kann eine Aufnahmebohrung von einer Stirnseite her in den Trommelmantel führen, vgl. Figur 7, und das beispielsweise stiftförmige Temperatur- und/oder Wärme-Leitelement 23 in dieser Aufnahmebohrung sitzen, wobei vorteilhafterweise das Leitelement 23 mit einem Kopfabschnitt aus der Aufnahmebohrung 24 herausschauen kann, vgl. Figur 7.

Die Temperaturbestimmungsvorrichtung 10 kann hierbei vorteilhafterweise einen stationären Temperatursensor 11 umfassen, der die Temperatur der Seiltrommel 2 über das genannte Temperatur- und/oder Wärme-Leitelement 23 berührungslos erfassen kann.

Vorteilhafterweise kann die genannte Ausnehmung, insbesondere die Aufnahmebohrung 24, im Bereich eines Bordscheibenfußes ausgebildet sein und im Durchmesser bzw. in der lichten Weite größer sein als der Durchmesser bzw. die Dicke des Temperatur- und/oder Wärme-Leitelements 23, sodass in diesem vergrößerten Ausnehmungsbereich keine Wärmeübertragung durch Kontakt erfolgt, vgl. den vergrößerten Ausschnitt Z der Figur 7. Ein Fußabschnitt des stiftförmigen Temperatur- und/oder Wärme-Leitelements 23 kann passgenau in einem weiter- bzw. tiefergehenden Abschnitt der Aufnahmebohrung 24 sitzen, um dort die Temperatur zu erfassen bzw. die Temperatur und Wärme des Trommelabschnitts zu übernehmen. Vorteilhafterweise kann die Ausnehmung 24 in Form einer Stufenbohrung ausgebildet sein.

Vorteilhafterweise kann die Temperatur gezielt im Inneren des Trommelmantels 3 an einer gewünschten Stelle erfasst werden, obwohl ein stationärer Temperatursensor 11 eingesetzt wird.

Um die Temperatur des Leitelements 23 zu bestimmen, kann die Seiltrommel 2 derart positioniert werden, dass der Temperatursensor 11 dem Leitelement 23 gegenüberliegt bzw. die Temperatur am Leitelement 23 erfassen kann.

Alternativ können aber auch mehrere Temperatur- und/oder Wärme-Leitelemente 23 angebracht werden, beispielsweise in Aufnahmebohrungen 24, die über den Umfang verteilt angeordnet sind und in der in Figur 7 gezeigten Weise von der Stirnseite her in den Trommelmantel 3 führen können.

Vorteilhafterweise können die Temperatur- und/oder Wärme-Leitelemente 23 mit einem ringförmigen Erfassungskragen beispielsweise in Form eines ringförmigen Blechs verbunden sein, über das der Temperatursensor 11 vorteilhafterweise kontinuierlich die Temperatur erfassen kann, ohne die Seiltrommel 2 in eine bestimmte rotatorische Stellung bringen zu müssen. Insbesondere kann der Temperatursensor 11 berührungslos arbeitend ausgebildet sein.

Vorteilhafterweise kann mit der beschriebenen Temperaturüberwachung der Seiltrommel 2 auf die Temperatur des Seils 5 geschlossen werden und somit gravierende Gefahrenstellen vermieden werden.

Ebenso kann durch die Temperaturüberwachung aber auch ein sicherer Betrieb der Seilwinde 1 mit einem hochfesten Faserseil erfolgen, das eine verhältnismäßig geringe zulässige Grenztemperatur besitzt. Die aufgrund der Erwärmung der Seiltrommel 2 bedingte Verwendung von Faserseilen mit verhältnismäßig hohen zulässigen Grenztemperaturen wird hierdurch hinfällig. Gleichzeitig kann die zulässige Grenztemperatur eines Faserseils besser ausgereizt werden. Dies ermöglicht gleichzeitig bei der Herstellung von Faserseilen eine größere Bandbreite hinsichtlich der Werkstoffauswahl, wodurch sich andere Seileigenschaften entsprechend positiv beeinflussen lassen.

Vorteilhafterweise kann durch die beschriebene Temperaturüberwachung der sichere Betrieb der Seilwinde mit einem Faserseil auch in fördertechnischen Anlagen mit schwierigen Randbedingungen ermöglicht werden, so zum Beispiel bei verhältnismäßig hohen Umgebungstemperaturen oder einem Betrieb der Seilwinde mit einem Lastkollektiv, das zu einer hohen Getriebeerwärmung führt.

## Patentansprüche

1. Seilwinde mit einer Seiltrommel (2), auf der ein Seil (5) aufwickelbar ist, wobei eine Temperaturbestimmungseinrichtung (10) zum Bestimmen der Temperatur der Seiltrommel (2) vorgesehen ist, ***dadurch gekennzeichnet, dass*** die Temperaturbestimmungseinrichtung (10) einen Temperaturschalter (19) zum Bereitstellen eines Temperatursignals bei Erreichen oder Überschreiten einer vorbestimmten Grenztemperatur der Seiltrommel (2) aufweist.

2. Seilwinde nach dem vorhergehenden Anspruch, wobei die Temperaturbestimmungseinrichtung (10) auf einer Getriebeseite der Seiltrommel (2) zur Bestimmung der Temperatur eines Seiltrommelabschnitts, der ein Windengetriebe (8) umgibt oder daran angrenzt, angeordnet ist.

3. Seilwinde nach einem der vorhergehenden Ansprüche, wobei die Temperaturbestimmungseinrichtung (10) zumindest einen stationären Temperatursensor (11) umfasst, gegenüber dem die Seiltrommel (2) verdrehbar ist, wobei der stationäre Temperatursensor zumindest teilweise auf einer Außenseite der Seiltrommel (2) insbesondere an einer Stirnseite der Seiltrommel (2), angeordnet ist, wobei der Temperatursensor (11) berührungslos arbeitend ausgebildet ist und mit seinem Erfassungsbereich auf einen Bordscheiben-Fußabschnitt der Seiltrommel (2) gerichtet ist.

4. Seilwinde nach einem der vorhergehenden Ansprüche, wobei zumindest ein Temperatur- und/oder Wärme-Leitelement (23) vorgesehen ist, das in einem zu einer Außenseite hin offenen Hohlraum der Seilwinde zumindest teilweise aufgenommen ist und dessen Temperatur von einem außerhalb des Hohlraums angeordneten Temperatursensor (11) erfasst wird, wobei das Temperatur- und/oder Wärme-Leitelement (23) in einer Aufnahmebohrung (24) sitzt, die sich in die Seiltrommel (2) hinein erstreckt und zu einer Stirnseite der Seiltrommel (2) hin offen ist, wobei das Temperatur- und/oder Wärme-Leitelement (23) zur genannte Stirnseite der Seiltrommel (2) hin aus der Stirntrommel herausragt und ein stationärer, berührungslos arbeitender Sensor zur Erfassung der Temperatur des aus der Seiltrommel (2) herausragenden Abschnitts des Temperatur- und/oder Wärmeleitelements (23) vorgesehen ist, wobei die Aufnahmebohrung (24) in einem äußeren, zur Seiltrommelstirnseite hin angeordneten Abschnitt ein Übermaß gegenüber dem Temperatur- und/oder Wärme-Leitelement (23) besitzt, so dass keine Berührung zwischen Aufnahmebohrung (24) und Temperatur- und/oder Wärme-Leitelement (23) vorliegt, und das Temperatur- und/oder Wärme-Leitelement (23) erst in einem tieferen Abschnitt der Aufnahmebohrung (24) das Seiltrommelmaterial kontaktiert.

5. Seilwinde nach einem der vorhergehenden Ansprüche, wobei die Temperaturbestimmungseinrichtung (10) zumindest einen Temperatursensor (11) aufweist, der in einem Getriebegehäuse (9) eines Seilwindenantriebs (6) angeordnet oder an dem genannten Getriebegehäuse (9) montiert ist.

6. Seilwinde nach einem der vorhergehenden Ansprüche, wobei die Temperaturbestimmungseinrichtung (10) zumindest einen mit der Seiltrommel (2) mitrotierenden Temperatursensor (11) aufweist.

7. Seilwinde nach dem vorhergehenden Anspruch, wobei der mitrotierende Temperatursensor (11) in das Innere der Seiltrommel (2) integriert ist, wobei der Temperatursensor (11) an einer Innenmantelfläche eines Trommelmantels (3) der Seiltrommel (2) angeordnet ist und/oder zwischen einem Getriebe (8) des Seilwindenantriebs (6) und dem Trommelmantel (3) der Seilwinde (2) angeordnet ist.

8. Seilwinde nach einem der vorhergehenden Ansprüche, wobei die Temperaturbestimmungseinrichtung (10) eine berührungslos arbeitende Signalübertragungseinrichtung (15) zum Übertragen eines Temperatursignals aufweist, wobei die Signalübertragungseinrichtung (15) in das Innere der Seiltrommel (2) integriert ist und/oder mit der Seiltrommel (2) mitrotierend montiert ist.

9. Seilwinde nach einem der vorhergehenden Ansprüche, wobei die Temperaturbestimmungseinrichtung (10) einen Energieerzeuger (18) zum Erzeugen von elektrischer Energie aus einer Drehbewegung der Seiltrommel (2) aufweist.

10. Seilwinde nach einem der vorhergehenden Ansprüche, wobei die Temperaturbestimmungseinrichtung (10) zumindest einen optisch arbeitenden Temperaturanzeiger (20) aufweist, der bei Erreichen oder Überschreiten einer vorbestimmten Grenztemperatur seine Farbe ändert, wobei der Temperaturanzeiger (20) irreversibel farbumschlagend ausgebildet ist.

11. Seilwinde nach einem der vorhergehenden Ansprüche, ferner umfassend ein Seil (5), das auf der Seiltrommel (2) aufgewickelt ist, wobei eine Bestimmungsvorrichtung (21) zum Bestimmen einer Ablegereife und/oder einer Restlebensdauer des Seils (5) in Abhängigkeit der von der Temperaturbestimmungseinrichtung (10) bestimmten Temperatur der Seiltrommel (2) vorgesehen ist, wobei eine Anzeigevorrichtung (14) zum Anzeigen der Ablegereife und/oder der Restlebensdauer vorgesehen und/oder eine Übermittlungseinrichtung zum Übermitteln der Ablegereife und/oder Restlebensdauer an eine Wartungsplanungseinrichtung vorgesehen ist.

12. Seilwinde nach einem der vorhergehenden Ansprüche, wobei eine Steuervorrichtung (22) zum vorübergehenden Abschalten und/oder vorübergehenden Reduzieren eines Lastkollektivs und/oder einer Windenleistung und/oder - geschwindigkeit in Abhängigkeit der von der Temperaturbestimmungseinrichtung (10) bestimmten Seiltrommeltemperatur vorgesehen ist.

13. Seilwinde nach einem der vorhergehenden Ansprüche, wobei eine/die Steuervorrichtung (22) zum Einschalten und/oder Verstärken einer Kühlmaßnahme in Abhängigkeit der Seiltrommeltemperatur vorgesehen ist, wobei die Steuervorrichtung insbesondere dazu ausgebildet ist, eine Umwälzung eines Windenantriebs- und/oder Getriebe-Schmiermittels in Gang zu setzen und/oder zu erhöhen und/oder eine äußere Kühlung der Seilwinde (1) durch einen Lüfter in Gang zu setzen oder zu erhöhen, wenn die von der Temperaturbestimmungseinrichtung (10) bestimmte Seiltrommeltemperatur eine vorbestimmte Temperaturgrenze erreicht oder überschreitet oder sich dieser annähert.

14. Hebezeug mit einer Seilwinde, die nach einem der vorhergehenden Ansprüche ausgebildet ist.

15. Hebezeug nach dem vorhergehenden Anspruch, das als Kran ausgebildet ist, wobei die Seilwinde (1) eine Hubseilwinde des Krans bildet.

## Claims

1. A cable winch having a cable drum (2) onto which a cable (5) can be wound, wherein a temperature measuring device (10) is provided to measure the temperature of the cable drum (2), ***characterized in that*** the temperature measuring device (10) comprises a temperature switch (19) for providing a temperature signal when a predetermined limit temperature of the cable drum (2) is reached or exceeded.

2. The cable winch according to the preceding claim, wherein the temperature measuring device (10) is arranged on a gear unit side of the cable drum (2) for determining the temperature of a cable drum portion surrounding or adjacent to a winch transmission (8).

3. The cable winch according to any one of the preceding claims, wherein the temperature measuring device (10) comprises at least one stationary temperature sensor (11) with respect to which the cable drum (2) is rotatable, wherein the stationary temperature sensor is arranged at least partially on an outer side of the cable drum (2), in particular on an end face of the cable drum (2), wherein the temperature sensor (11) is configured to operate in a contactless manner and is directed with its detection region to a guard plate base portion of the cable drum (2).

4. The cable winch according to any one of the preceding claims, wherein at least one temperature conducting member and/or heat conducting member (23) is provided, which is at least partially received in a cavity of the cable winch open towards an outer side and the temperature of which is detected by a temperature sensor (11) arranged outside the cavity, wherein the temperature conducting member and/or heat conducting member (23) is seated in a reception bore (24) which extends into the cable drum (2) and is open towards an end face of the cable drum (2), wherein the temperature and/or heat conducting member (23) protrudes from the end face of the cable drum (2) towards said end face and a stationary, contactless operating sensor is provided for detecting the temperature of the portion of the temperature conducting member and/or heat conducting member (23) protruding from the cable drum (2), wherein the reception bore (24) has an oversize in an outer portion arranged towards the cable drum end face with respect to the temperature conducting member and/or heat conducting member (23), so that there is no contact between the reception bore (24) and the temperature conducting member and/or heat conducting member (23), and the temperature conducting member and/or heat conducting member (23) contacts the cable drum material only in a deeper portion of the reception bore (24).

5. The cable winch according to any one of the preceding claims, wherein the temperature measuring device (10) comprises at least one temperature sensor (11) arranged in a transmission housing (9) of a cable winch drive (6) or mounted on said transmission housing (9).

6. The cable winch according to any one of the preceding claims, wherein the temperature measuring device (10) comprises at least one temperature sensor (11) co-rotating with the cable drum (2).

7. The cable winch according to the preceding claim, wherein the co-rotating temperature sensor (11) is integrated into the interior of the cable drum (2), wherein the temperature sensor (11) is arranged on an inner casing surface of a drum casing (3) of the cable drum (2) and/or is arranged between a gear mechanism (8) of the cable winch drive (6) and the drum casing (3) of the cable winch (2).

8. The cable winch according to any one of the preceding claims, wherein the temperature measuring device (10) comprises a contactlessly operating signal transmission device (15) for transmitting a temperature signal, wherein the signal transmission device (15) is integrated into the interior of the cable drum (2) and/or is mounted co-rotating with the cable drum (2).

9. The cable winch according to any one of the preceding claims, wherein the temperature measuring device (10) comprises an energy generator (18) for generating electrical energy from rotary movement of the cable drum (2).

10. The cable winch according to any one of the preceding claims, wherein the temperature measuring device (10) comprises at least one optically operating temperature indicator (20) which changes color when a predetermined limit temperature is reached or exceeded, wherein the temperature indicator (20) is configured to irreversibly change color.

11. The cable winch according to any one of the preceding claims, further comprising a cable (5) wound on the cable drum (2), wherein a determination device (21) is provided for determining a replacement state and/or a remaining service life of the cable (5) in dependence on the temperature of the cable drum (2) determined by the temperature measuring device (10), wherein a display device (14) for displaying the replacement state and/or the remaining service life is provided and/or a transmission device for transmitting the replacement state and/or remaining service life to a maintenance planning device is provided.

12. The cable winch according to any one of the preceding claims, wherein a controller (22) is provided for temporarily shutting down and/or temporarily reducing a load spectrum and/or winch power and/or winch speed in dependence on the cable drum temperature determined by the temperature measuring device (10).

13. The cable winch according to any one of the preceding claims, wherein a/the controller (22) is provided for switching on and/or increasing a cooling measure in dependence on the cable drum temperature, wherein said controller is configured in particular to start and/or increase a circulation of a winch drive lubricant and/or gear mechanism lubricant and/or to start or increase an external cooling of the cable winch (1) by a fan when the cable drum temperature determined by the temperature measuring device (10) reaches or exceeds a predetermined temperature limit or approaches it.

14. A lifting device comprising a cable winch configured according to any one of the preceding claims.

15. The lifting device according to the preceding claim, which is configured as a crane, wherein the cable winch (1) forms a hoisting cable winch of the crane.

## Revendications

1. Treuil à câble comportant un tambour à câble (2) sur lequel un câble (5) peut être enroulé, un moyen de détermination de température (10) étant prévu pour déterminer la température du tambour à câble (2), ***caractérisé en* ce *que*** le moyen de détermination de température (10) présente un interrupteur thermostatique (19) destiné à fournir un signal de température lorsqu'une température limite prédéfinie du tambour à câble (2) est atteinte ou dépassée.

2. Treuil à câble selon la revendication précédente, dans lequel le moyen de détermination de température (10) est agencé sur un côté mécanisme de transmission du tambour à câble (2) pour déterminer la température d'une partie de tambour à câble qui entoure ou qui est adjacente à un mécanisme de transmission de treuil (8).

3. Treuil à câble selon l'une des revendications précédentes, dans lequel le moyen de détermination de température (10) comprend au moins un capteur de température (11) stationnaire, par rapport auquel le tambour à câble (2) peut tourner, le capteur de température stationnaire étant agencé au moins en partie sur un côté externe du tambour à câble (2) en particulier sur un côté frontal du tambour à câble (2), le capteur de température (11) étant réalisé de manière à fonctionner sans contact et étant orienté avec sa zone de détection vers une partie pied de joue du tambour à câble (2).

4. Treuil à câble selon l'une des revendications précédentes, dans lequel au moins un élément conducteur de chaleur et/ou de température (23) est prévu, lequel est reçu au moins en partie dans une cavité du treuil à câble qui est ouverte vers un côté externe, et dont la température est détectée par un capteur de température (11) agencé en dehors de la cavité, l'élément conducteur de chaleur et/ou de température (23) étant logé dans un trou de réception (24) qui s'étend à l'intérieur du tambour à câble (2) et qui est ouvert vers un côté frontal du tambour à câble (2), l'élément conducteur de chaleur et/ou de température (23) dépassant du tambour frontal vers ledit côté frontal du tambour à câble (2) et un capteur stationnaire fonctionnant sans contact, destiné à détecter la température de la partie dépassant du tambour à câble (2) de l'élément conducteur de chaleur et/ou de température (23), étant prévu, le trou de réception (24) possédant, dans une partie extérieure agencée en direction du côté frontal de tambour à câble, un surdimensionnement par rapport à l'élément conducteur de chaleur et/ou de température (23) de telle sorte qu'aucun contact n'a lieu entre le trou de réception (24) et l'élément conducteur de chaleur et/ou de température (23) et que l'élément conducteur de chaleur et/ou de température (23) vient en contact avec le matériau de tambour à câble uniquement dans une partie plus profonde du trou de réception (24).

5. Treuil à câble selon l'une des revendications précédentes, dans lequel le moyen de détermination de température (10) présente au moins un capteur de température (11) qui est agencé dans un boîtier de mécanisme de transmission (9) d'un entraînement de treuil à câble (6) ou monté sur ledit boîtier de mécanisme de transmission (9).

6. Treuil à câble selon l'une des revendications précédentes, dans lequel le moyen de détermination de température (10) présente au moins un capteur de température (11) conjointement rotatif avec le tambour à câble (2).

7. Treuil à câble selon la revendication précédente, dans lequel le capteur de température (11) conjointement rotatif est intégré à l'intérieur du tambour à câble (2), le capteur de température (11) étant agencé sur une surface d'enveloppe interne d'une enveloppe de tambour (3) du tambour à câble (2) et/ou agencé entre un mécanisme de transmission (8) de l'entraînement de treuil à câble (6) et l'enveloppe de tambour (3) du treuil à câble (2).

8. Treuil à câble selon l'une des revendications précédentes, dans lequel le moyen de détermination de température (10) présente un moyen de transmission de signal (15) fonctionnant sans contact destiné à transmettre un signal de température, le moyen de transmission de signal (15) étant intégré à l'intérieur du tambour à câble (2) et/ou monté de manière conjointement rotative avec le tambour à câble (2).

9. Treuil à câble selon l'une des revendications précédentes, dans lequel le moyen de détermination de température (10) présente un générateur d'énergie (18) destiné à générer de l'énergie électrique à partir d'un mouvement de rotation du tambour à câble (2).

10. Treuil à câble selon l'une des revendications précédentes, dans lequel le moyen de détermination de température (10) présente au moins un indicateur de température (20) fonctionnant de manière optique, qui change de couleur lorsqu'une température limite prédéfinie est atteinte ou dépassée, l'indicateur de température (20) étant réalisé à changement de couleur irréversible.

11. Treuil à câble selon l'une des revendications précédentes, comprenant en outre un câble (5) qui est enroulé sur le tambour à câble (2), un dispositif de détermination (21), destiné à déterminer un état d'usure nécessitant le remplacement et/ou une durée de vie restante du câble (5) en fonction de la température du tambour à câble (2) déterminée par le moyen de détermination de température (10), étant prévu, un dispositif d'affichage (14), destiné à afficher l'état d'usure nécessitant le remplacement et/ou la durée de vie restante, étant prévu et/ou un moyen de communication, destiné à communiquer l'état d'usure nécessitant le remplacement et/ou la durée de vie restante à un moyen de planification de maintenance, étant prévu.

12. Treuil à câble selon l'une des revendications précédentes, dans lequel un dispositif de commande (22), destiné à désactiver temporairement et/ou réduire temporairement un ensemble de charges et/ou une puissance et/ou vitesse de treuil en fonction de la température de tambour à câble déterminée par le moyen de détermination de température (10), est prévu.

13. Treuil à câble selon l'une des revendications précédentes, dans lequel un/le dispositif de commande (22) est prévu pour mettre en marche et/ou renforcer une mesure de refroidissement en fonction de la température de tambour à câble, le dispositif de commande étant en particulier conçu pour démarrer et/ou augmenter une circulation d'un lubrifiant pour entraînement de treuil et/ou pour engrenages et/ou démarrer ou augmenter un refroidissement externe du treuil à câble (1) par un ventilateur quand la température de tambour à câble déterminée par le moyen de détermination de température (10) atteint ou dépasse ou s'approche d'une limite de température prédéfinie.

14. Engin de levage comportant un treuil à câble qui est conçu selon l'une des revendications précédentes.

15. Engin de levage selon la revendication précédente, qui est réalisé sous la forme d'une grue, le treuil à câble (1) formant un treuil à câble de levage de la grue.
